# EUROPÄISCHE PATENTANMELDUNG

(11) **EP 1 108 466 A2**
(43) Veröffentlichungstag der Anmeldung: **20.06.2001**
(21) Anmeldenummer: 00126502.4
(22) Anmeldetag: 08.12.2000
(51) Int. Cl.: B01J 19/00, B01J 37/02, B01J 8/06, B01J 19/24

(54) **Verfahren zur kombinatorischen Herstellung und Testung von Heterogenkatalysatoren**

(30) Priorität: 13.12.1999 DE 19959973
(71) Anmelder: BASF AKTIENGESELLSCHAFT, 67056 Ludwigshafen (DE)
(72) Erfinder: Schunk, Stephan Andreas, 69115 Heidelberg (DE); Demuth, Dirk, Dr., 69226 Nussloch (DE); Hibst, Hartmut, Prof. Dr., 69198 Schriesheim (DE)
(74) Vertreter: Isenbruck, Günter, Dr.

(57) **Zusammenfassung**

Ein Verfahren zur Herstellung von Arrays aus Heterogenkatalysatoren und/oder deren Vorläufern aus einem Körper, der, bevorzugt parallele, durchgehende Kanäle aufweist und in dem mindestens n Kanäle n unterschiedliche Heterogenkata-lysatoren und/oder deren Vorläufer enthalten, wobei n den Wert 2, vorzugs-weise 10, besonders bevorzugt 100, hat, umfaßt die folgenden Schritte:
a1) Herstellen von Lösungen, Emulsionen und/oder Dispersionen von Elementen und/oder Elementverbindungen der im Katalysator und/oder Katalysatorvorläufer vorliegenden chemischen Elemente, und gege-benenfalls von Dispersionen anorganischer Trä germaterialien,
a2) gegebenenfalls Eintragen von Haftvermittlern, Bindemitteln, Viskositätsreglern, pH-regelnden Mitteln und/oder festen anorganischen Trägern in die Lösungen, Emulsionen und/oder Dispersionen,
a3) gleichzeitige oder aufeinanderfolgende Beschichtung der Kanäle des Körpers mit den Lösungen, Emulsionen und/oder Dispersionen, wobei in jeden Kanal eine vorbestimmte Menge der Lösungen, Emulsionen und/oder Dispersionen eingebracht wird, um eine vor-bestimmte Zusammensetzung zu erhalten,
a4) Behandlung und Umsetzung der nach der Beschichtung erhaltenen frischimprägnierten feuchten Kanäle mit einem oder mehreren Reaktivgasen, und
a5) gegebenenfalls Aufheizen des beschichteten Körpers, gegebenenfalls in Gegenwart von Inert- oder Reaktivgasen, auf eine Temperatur im Bereich von 20 bis 1500°C zum Trocknen und gegebenenfalls Sintern oder Calcinieren der Katalysatoren und/oder Katalysatorvorläufer.

## Beschreibung

Die Erfindung betrifft Verfahren zur kombinatorischen Herstellung und Testung von Heterogenkatalysatoren und nach diesem Verfahren erhaltene Katalysatoren.

Zur Herstellung und Untersuchung von neuen chemischen Verbindungen hat sich neben der klassischen Chemie, die auf die Synthese und Untersuchung einzelner Substanzen gerichtet ist, die sogenannte kombinatorische Chemie entwickelt. Hierbei wurden zunächst eine Vielzahl von Reaktanten in einer Eintopfsynthese umgesetzt, und es wurde untersucht, ob das entstandene Reaktionsgemisch die gewünschten Eigenschaften, beispielsweise eine pharmakologische Wirksamkeit, zeigte. Wurde eine Wirksamkeit für ein derartiges Reaktionsgemisch gefunden, so mußte in einem weiteren Schritt ermittelt werden, welche spezielle Substanz im Reaktionsgemisch für die Wirksamkeit verantwortlich war. Neben dem hohen Aufwand zur Ermittlung der eigentlich aktiven Verbindung war es zudem schwierig, bei einer Vielzahl von Reaktanten unerwünschte Nebenreaktionen auszuschließen.

Bei einem anderen Ansatz der kombinatorischen Synthese erfolgt die Synthese einer Vielzahl von Verbindungen durch gezielte Dosierung und Umsetzung einer Reihe von Reaktanten in einer Vielzahl von unterschiedlichen Reaktionsgefäßen. Bei diesem Verfahren liegt vorzugsweise in jedem Reaktionsgefäß ein Umsetzungsprodukt vor, so daß bei beispielsweise gegebener pharmakologischer Wirksamkeit eines Gemisches die zu seiner Herstellung eingesetzten Ausgangsstoffe sofort bekannt sind.

Neben ersten Anwendungen dieser spezifischeren kombinatorischen Synthese bei der Suche nach neuen pharmakologisch wirksamen Substanzen erfolgte in jüngster Zeit eine Ausdehnung des Syntheseverfahrens auch auf niedermolekulare organische Verbindungen sowie organische und anorganische Katalysatoren.

X.-D. Xiang et al., "A Combinatorial Approach for Materials Discovery", Science 268 (1995), Seiten 1738 bis 1740 beschreiben die Herstellung von BiSrCaCuO- und YBaCuO-Supraleiterfilmen auf Substraten, wobei durch physikalische Maskierungsverfahren und Dampfabscheidetechniken bei der Abscheidung der entsprechenden Metalle ein kombinatorischer Array von unterschiedlichen Metallzusammensetzungen erhalten wird. Nach dem Calcinieren liegen an unterschiedlichen Positionen des Arrays unterschiedliche Zusammensetzungen vor und können mit Mikrosonden beispielsweise auf ihre Leitfähigkeit hin untersucht werden.

In der WO 96/11878 ist neben der Herstellung derartiger Supraleiter-Arrays auch die Herstellung von Zeolithen beschrieben, wobei aus mehreren Metallsalzlösungen mit einem Ink-Jet die jeweils benötigten Mengen ohne vorheriges Mischen auf einer Art Tüpfelplatte dosiert werden, wobei bei Zugabe der letzten Lösung eine Fällung einsetzt. Die Herstellung von BSCCO-Supraleitern kann auch durch getrenntes Dosieren der einzelnen Nitratlösungen der benötigten Metalle mittels Versprühen auf eine Art Tüpfelplatte und anschließendes Aufheizen erfolgen.

Mit den bekannten Verfahren können unterschiedliche heterogenkatalysatoren hergestellt werden. Die Testung der Katalysatoren ist jedoch aufwendig und kann oft nicht unter realistischen Bedingungen, z.B. mit den erforderlichen Verweilzeiten der Reaktanten am Katalysator, erfolgen, da die Katalysatoren beispielsweise auf einem größeren, im allgemeinen flach ausgebildeten Träger vorliegen und dieser beispielsweise mit einem umzusetzenden Gasgemisch beschickt werden muß.

Aufgabe der vorliegenden Erfindung ist die Bereitstellung eines Verfahrens zur Hier-stellung von Arrays aus anorganischen heterogenkatalysatoren oder deren Vorläufern, bei dem die erhaltenen Katalysatoren mit geringerem Aufwand und unter Bedingungen getestet werden können, die einem großtechnischen Verfahren ähnlich sind. Zudem sollen die Nachteile der bestehenden Systeme vermieden werden. Auch entsprechende Arrays sollen bereitgestellt werden.

Deshalb wurden in der DE-A-198 05 719 Arrays aus, vorzugsweise anorganischen, Heterogenkatalysatoren und/oder deren Vorläufern vorgeschlagen, aufgebaut aus einem Körper, der, bevorzugt parallele, durchgehende Kanäle aufweist, in dem mindestens n Kanäle n unterschiedliche, vorzugsweise anorgani-sche, Heterogenkatalysatoren und/oder deren Vorläufer enthalten, wobei n den Wert 2, vorzugsweise 10, besonders bevorzugt 100, insbesondere 1000, speziell 10000 hat. Dabei kann der Körper ein Rohrbündelreaktor oder Wärmetauscher sein, und die Kanäle sind Rohre, oder ein Block aus einem Massivmatcrial, der die Kanäle, beispielsweise in Form von Bohrungen, aufweist.

Aufgabe der vorliegenden Erfindung ist die Bereitstellung von Verfahren zur Herstellung von Arrays aus Heterogenkatalysatoren und/oder deren Vorläufern, die das Spektrum der gemäß WO zugänglichen Arrays erweitern.

Die Aufgabe wird erfindungsgemäß gelöst durch die nachstehend aufgeführten Verfahren zur Herstellung von Arrays aus Heterogenkatalysatoren und/oder deren Vorläufern, aufgebaut aus einem Körper, der, bevorzugt parallele, durchgehende Kanäle aufweist und in dem mindestens n Kanäle n unterschiedliche lleterogenkatalysatoren und/oder deren Vorläufer enthalten, wobei n den Wert 2, vorzugsweise 10, besonders bevorzugt 100, insbesondere 1.000, speziell 10.000 hat.

Der Begriff "Array aus anorganischen Heterogenkatalysatoren oder deren Vorläufern" bezeichnet dabei eine Anordung unterschiedlicher anorganischer Heterogenkatalysatoren oder deren Vorläufer auf vorbestimmten, räumlich voneinander getrennten Bereichen eines Körpers, bevorzugt eines Körpers mit parallelen durchgehenden Kanälen vorzugsweise eines Rohrbündelreaktors oder Wärmetauschers. Die geometrische Anordnung der einzelnen Bereiche zueinander kann dabei frei gewählt werden. Beispielsweise können die Bereiche in Art einer Reihe (quasi eindimensional) oder eines Schachbrettmusters (quasi zweidimensional) angeordnet sein. Bei einem Körper mit parallelen durchgehenden Kanälen, bevorzugt Rohrbündelreaktor oder Wärmetauscher mit einer Vielzahl zueinander paralleler Rohre wird die Anordnung bei der Betrachtung einer Querschnittsfläche senkrecht zur Längsachse der Rohre deutlich: es ergibt sich eine Fläche, in der die einzelnen Rohrquerschnitte die unterschiedlichen voneinander beabstandeten Bereiche wiedergeben. Die Bereiche oder Rohre können - beispielsweise für Rohre mit kreisförmigem Querschnitt - auch in einer dichten Packung vorliegen, so daß unterschiedliche Reihen von Bereichen zueinander versetzt angeordnet sind.

Der Begriff "Körper" beschreibt einen dreidimensionalen Gegenstand, der eine Vielzahl (mindestens n) durchgehender Kanäle aufweist. Die Kanäle verbinden somit zwei Oberflächenbereiche des Körpers und laufen durch den Körper hindurch. Vorzugsweise sind die Kanäle im wesentlichen, bevorzugt vollständig parallel zueinander. Der Körper kann dabei aus einem oder mehreren Materialien aufgebaut sein und massiv oder hohl sein. Er kann jede geeignete geometrische Form aufweisen. Vorzugsweise weist er zwei zueinander parallele Oberflächen auf, in denen sich jeweils eine Öffnung der Kanäle befindet. Die Kanäle verlaufen dabei vorzugsweise senkrecht zu diesen Oberflächen. Ein Beispiel eines derartigen Körpers ist ein Quader oder Zylinder, in dem die Kanäle zwischen zwei parallelen Oberflächen verlaufen. Es ist aber auch eine Vielzahl ähnlicher Geometrien denkbar.

Der Begriff' "Kanal" beschreibt eine durch den Körper hindurchlaufende Verbindung zweier an der Körperoberfläche vorliegender Öffnungen, die beispielsweise den Durchtritt eines Fluids durch den Körper erlaubt. Der Kanal kann dabei eine beliebige Geometrie aufweisen. Er kann eine über die Länge des Kanals veränderliche Querschnittsfläche oder vorzugsweise eine konstante Kanalquerschnittstläche aufweisen. Der Kanalquerschnitt kann beispielsweise einen ovalen, runden oder polygonalen Umriß mit geraden oder gebogenen Verbindungen zwischen den Eckpunkten des Polygons aufweisen. Bevorzugt sind ein runder oder gleichseitiger polygonaler Querschnitt. Vorzugsweise weisen alle Kanäle im Körper die gleiche Geometrie (Querschnitt und länge) auf und verlaufen parallel zueinander.

Die Begriffe "Rohrbündelreaktor" und "Wärmetauscher" beschreiben zusam-mengefaßte parallele Anordungen einer Vielzahl von Kanälen in Form von Rohren, wobei die Rohre einen beliebigen Querschnitt aufweisen können. Die Rohre sind in einer festen räumlichen Beziehung zueinander angeordnet, liegen vorzugsweise voneinander räumlich beabstandet vor und sind vorzugsweise von einem Mantel umgeben, der alle Rohre umfaßt. Hierdurch kann beispielsweise ein Heiz- oder Kühlmedium durch den Mantel geführt werden, so daß alle Rohre gleichmäßig temperiert werden.

Der Begriff "Block aus einem Massivmaterial" beschreibt einen Körper aus einem Massivmaterial (das wiederum aus einem oder mehreren Ausgangsmaterialien aufgebaut sein kann), der die Kanäle, beispielsweise in Form von Bohrungen, aufweist. Die Geometrie der Kanäle (Bohrungen) kann dabei wie vorstehend für die Kanäle allgemein beschrieben frei gewählt werden. Die Kanäle (Bohrungen) müssen nicht durch Bohren angebracht werden, sondern können beispielsweise auch beim Formen des Massivkörpers/Blocks, etwa durch Extrusion einer organischen und/oder anorganischen Formmasse, ausgespart werden (beispielsweise durch eine entsprechende Düsengeometrie bei der Extrusion). Im Unterschied zu den Rohrbündelreaktoren oder Wärmetauschern ist der Raum im Körper zwischen den Kanälen beim Block immer durch das Massivmaterial ausgefüllt. Vorzugsweise ist der Block aus einem oder mehreren Metallen aufgebaut.

Der Begriff "vorbestimmt" bedeutet, daß beispielsweise eine Reihe unter-schiedlichcr Katalysatoren oder Katalysatorvorläufer derart in einen Rohrbün-delreaktor oder Wärmetauscher eingebracht wird, daß die Zuordnung der unterschiedlichen Katalysatoren oder Katalysatorvorläufer zu den einzelnen Rohren aufgezeichnet wird und später beispielsweise bei der Bestimmung der Aktivität, Selektivität und/oder Langzeitstabilität der einzelnen Katalysatoren abgerufen werden kann, um eine eindeutige Zuordnung für bestimmte Meßwerte zu bestimmten Katalysatorzusammensetzungen zu ermöglichen. Bevorzugt erfolgt die Herstellung und Verteilung der Katalysatoren oder deren Vorläufer auf die unterschiedlichen Rohre des Rohrbündelreaktors rechnergesteuert, wobei die jeweilige Zusammensetzung eines Katalysators und die Position des Rohrs im Rohrbündelreaktor, in das der Katalysator oder Katalysatorvorläufer eingebracht wird, im Computer gespeichert wird und später abgerufen werden kann. Der Begriff "vorbestimmt" dient damit der Unterscheidung gegenüber einer zufälligen oder statistischen Verteilung der im allgemeinen unterschiedlichen Katalysatoren oder Katalysatorvorläufer auf die Rohre eines Rohrbündelreaktors.

Die Herstellung der erfindungsgemäßen Arrays aus, vorzugsweise anorganischen, Heterogen-katalysatoren und/oder deren Vorläufern kann erfindungsgemäß nach unterschiedlichen Verfahren erfolgen:

Das Verfahren a umfaßt die folgenden Schritte:
a1) Herstellen von Lösungen, Emulsionen und/oder Dispersionen von Elementen und/oder Elementverbindungen der im Katalysator und/oder Katalysatorvorläufer vorliegenden chemischen Elemente, und gege-benenfalls von Dispersionen anorganischer Trägermaterialien,
a2) gegebenenfalls Eintragen von Haftvermittlern, Bindemitteln, Viskositätsreglern, pH-regelnden Mitteln und/oder festen anorganischen Trägern in die Lösungen, Emulsionen und/oder Dispersionen,
a3) gleichzeitige oder aufeinanderfolgende Beschichtung der Kanäle des Körpers mit den Lösungen, Emulsionen und/oder Dispersionen, wobei in jeden Kanal eine vorbestimmte Menge der lösungen, Emulsionen und/oder Dispersionen eingebracht wird, um eine vorbestimmte Zusammensetzung zu erhalten,
a4) Behandlung und Umsetzung der nach der Beschichtung erhaltenen frischimprägnierten feuchten Kanäle mit einem oder mehreren Reaktivgasen, und
a5) gegebenenfalls Aufheizen des beschichteten Körpers, gegebenen-falls in Gegenwart von Inert- oder Reaktivgasen, auf eine Temperatur im Bereich von 20 bis 1500°C zum Trocknen und gegebenenfalls Sintern oder Calcinieren der Katalysatoren und/oder Katalysatorvorläufer.

Das Verfahren b umfaßt die folgenden Schritte:
b1) Herstellen von Lösungen, Emulsionen und/oder Dispersionen von Elementen und/oder Elementverbindungen der im Katalysator und/oder Katalysatorvorläufer vorliegenden Elemente, und gege-benenfalls von Dispersionen anorganischer Trägermaterialien,
b2) gegebenenfalls Eintragen von Haftvermittlern, Bindemitteln, Viskositätsreglem, pH-regelnden Mitteln und/oder festen anorganischen Trägern in die Lösungen, Emulsionen und/oder Dispersionen,
b3) gleichzeitige oder aufeinanderfolgende Beschichtung von in den Kanälen des Körpers vorliegenden Katalysatorträgern mit den Lösun-gen, Emulsionen und/oder Dispersionen, wobei in jeden Kanal eine vorbestimmte Menge der Lösungen, Emulsionen und/oder Dispersionen eingebracht wird, um eine vorbestimmte Zusam-mensetzung auf den Katalysatorträgern zu erhalten,
b4) Behandlung und Umsetzung der nach der Beschichtung erhaltenen frischimprägnierten feuchten Kanäle mit einem oder mehreren Reaktivgasen, und
b5) gegebenenfalls Autheizen des Körpers mit den beschichteten Katalysatorträgern in den Kanälen, gegebenenfalls in Gegenwart von Inert- oder Reaktivgasen, auf eine Temperatur im Bereich von 20 bis 1500°C zum Trocknen und gegebenenfalls Sintern oder Calci-nieren der Katalysatoren und/oder Katalysatorvorläufer.

Das Verfahren c) umfaßt die folgenden Schritte:
c1 ) Herstellen von Lösungen, Emulsionen und/oder Dispersionen von Elementen und/oder Elementverbindungen der im Katalysator und/oder Katalysatorvorläufer vorliegenden chemischen Elemente und gegebenenfalls von Dispersionen anorganischer Trägermateria-lien,
c2) Vermischen vorbestimmter Mengen der Lösungen, Emulsionen und/oder Dispersionen und gegebenenfalls von Fällungshilfsmitteln in einem oder mehreren parallel betriebenen Reaktionsgefäßen,
c3) gegebenenfalls Eintragen von Haftvermittlern, Bindemitteln, Viskositätsreglern, pH-regelnden Mitteln und/oder festen anorganischen Trägern in die erhaltene(n) Mischung(en),
c4) Beschichtung eines oder mehrerer vorbestimmter Kanäle des Kör-pers mit der Mischung oder mehreren Mischungen.
c5) Wiederholung der Schritte c2) bis c4) für andere Kanäle des Körpers, bis die Kanäle mit den jeweils vorbestimmten Katalysa-tor- und/oder Katalysatorvorläuferzusammensetzungen beschichtet sind,
c6) Behandlung und Umsetzung der nach der Beschichtung erhaltenen frischimprägnierten feuchten Kanäle mit einem oder mehreren Reaktivgasen, und
c7) gegebenenfalls Aufheizen des beschichteten Körpers, gegebenen-falls in Gegenwart von Inert- oder Reaktivgasen, auf eine Temperatur im Bereich von 20 bis 1500°C zum Trocknen und gegebenenfalls Sintern oder Calcinieren der Katalysatoren und/oder Katalysatorvorläufer.

Vorzugsweise umfaßt es die folgenden Schritte:
c1) Herstellen von Lösungen von Elementverbindungen der im Kataly-sator vorliegenden chemischen Elemente außer Sauerstoff, und gegebenenfalls von Dispersionen anorganischer Trägermaterialien
c2) Vermischen vorbestimmter Mengen der Lösungen beziehungsweise Dispersionen und gegebenenfalls von Fällungshiltismitteln in einem oder mehreren parallel betriebenen Reaktionsgefäßen unter Fällung der im Katalysator vorliegenden chemischen Elemente,
c3) gegebenenfalls Eintragen von Haftvermittlern, Bindemitteln, Viskositätsreglern, pH-regelnden Mitteln und/oder festen anorganischen Trägern in die erhaltene Suspension,
c4) Beschichtung eines oder mehrerer vorbestimmter Rohre des Rohr-bündelreaktors oder Wärmetauschers mit der Suspension,
c5) Wiederholung der Schritte c2) bis c4) für unterschiedliche Rohre des Rohrbündelreaktors oder Wärmetauschers bis die Rohre mit den jeweils vorbestimmten Katalysatorzusammensetzungen beschichtet sind,
c6) Behandlung und Umsetzung der nach der Beschichtung erhaltenen frischimprägnierten feuchten Kanäle mit einem oder mehreren Reaktivgasen, und
c7) Aufheizen des beschichteten Rohrbündelreaktors oder Wärmetau-schers, gegebenenfalls in Gegenwart von Inert- oder Reaktivgasen, auf eine Temperatur im Bereich von 20 bis 1500°C zum Trocknen und gegebenenfalls Sintern oder Calcinieren der Katalysatoren.

Das Verfahren d) umfaßt die folgenden Schritte:
d1 ) Herstellen von Lösungen, Emulsionen und/oder Dispersionen von Elementen und/oder Elementverbindungen der im Katalysator und/oder Katalysatorvorläufer vorliegenden chemischen Elemente und gegebenenfalls von Dispersionen anorganischer Trägermateria-lien,
d2) Vermischen vorbestimmter Mengen der Lösungen, Emulsionen und/oder Dispersionen und gegebenenfalls von Fällungshilfsmitteln in einem oder mehreren parallel betriebenen Reaktionsgefiäßen,
d3) gegebenenfalls Eintragen von Haftvermittlern, Bindemitteln, Viskositätsreglern, pH-regelnden Mitteln und/oder festen anorganischen Trägern in die erhaltene(n) Mischung(en),
d4) Beschichtung von in einem oder mehreren vorbestimmten Kanälen des Körpers vorliegenden Katalysatorträgern mit der Mischung oder einer oder mehrerer der Mischungen,
d5) Wiederholung der Schritte d2) bis d4) für andere (das heißt in der Regel die noch nicht beschichteten) Katalysatorträger in den Kanälen des Körpers, bis die (bevorzugt alle) in den Kanälen des Körpers vorliegenden Katalysatorträger mit den jeweils vorbestimmten (in der Regel voneinander abweichenden) Katalysator- und/oder Katalysatorvorläuferzusammensetzungen beschichtet sind,
d6) Behandlung und Umsetzung der nach der Beschichtung erhaltenen frischimprägnierten feuchten Kanäle mit einem oder mehreren Reaktivgasen, und
d7) gegebenenfalls Autheizen des Körpers mit den beschichteten Katalysatorträgern in den Kanälen, gegebenenfalls in Gegenwart von Inert- oder Reaktivgasen, auf eine Temperatur im Bereich von 20 bis 1500°C zum Trocknen und gegebenenfalls Sintern oder Calci-nieren der Katalysatoren und/oder Katalysatorvorläufer.

Dabei kann die Haftfähigkeit der Kanäle (z.B. der Innenfläche der Rohre) des Körpers oder der Katalysatorträger vor der Beschichtung durch chemische, physikalische oder mechanische Vorbehandlung der Innenwände der Kanäle (z.B. Innenrohre) oder der Katalysatorträger oder durch Aufbringen einer Haftschicht vergrößert werden. dies trifft insbesondere auf die Verfahren a) und c) bzw. b) und d) zu.

Das Verfahren e) umfaßt die folgenden Schritte:
e1) Umsetzung von vorbestimmten trockenen porösen Katalysatorträgern mit einem oder mehreren Reaktivgasen zur Herstellung von vorbestimmten Trägerkatalysatoren außerhalb oder innerhalb des Körpers,
e2) gegebenenfalls Einbringen der Außerhalb des Körpers hergestellten Trägerkatalysatoren in vorbestimmte Kanäle des Körpers, und
e3) gegebenenfalls Aufheizen des gefüllten Körpers, gegebenenfalls in Gegenwart von Inert- oder Reaktivgasen, auf eine Temperatur im Bereich von 20 bis 1500°C zum Trocknen und gegebenenfalls Sintern oder Calcinieren der Katalysatoren.

Das Verfahren f) umfaßt die folgenden Schritte:
f1) Beschichten und gegebenenfalls Aufheizen von vorbestimmten Katalysatorträgern zur Herstellung von vorbestimmten Trägerka-talysatoren in der vorstehend in Verfahren b) bzw. d) definierten Art außerhalb des Körpers,
f2) Einbringen der Trägerkatalysatoren in vorbestimmte Kanäle des Körpers,
f3) gegebenenfalls Aufheizen des gefüllten Körpers, gegebenenfalls in Gegenwart von Inert- oder Reaktivgasen, auf eine Temperatur im Bereich von 20 bis 1500°C zum Trocknen und gegebenenfalls Sintern oder Calcinieren der Katalysatoren.

Vorzugsweise entspricht dabei die äußere Form der Trägerkatalysatoren der Form des Kanalinneren im Körper zumindest im wesentlichen, vorzugsweise annähernd oder vollständig.

Das Verfahren g) umfaßt die folgenden Schritte:
g1) gleichzeitige oder aufeinanderfolgende Beschichtung der Kanäle des Körpers mit gasförmig gemachten chemischen Elementen oder deren Gemischen der im Katalysator vorliegenden chemischen Elemente, und
g2) gegebenenfalls Aufheizen des beschichteten Körpers, gegebenenfalls in Gegenwart von Inert- oder Reaktivgasen, auf eine Temperatur im Bereich von 20 bis 1500 °C zum Trocknen und gegebenenfalls Sintern oder Calcinieren der Katalysatoren und/oder Katalysatorvorläufer.

Das Verfahren h) umfaßt die folgenden Schritte:
h1) gleichzeitige oder aufeinanderfolgende Beschichtung der Kanäle des Körpers mit pulverförmigen chemischen Elementen oder deren Gemischen der im Katalysator vorliegenden chemischen Elemente, und
h2) gegebenenfalls Aufheizen des beschichteten Körpers, gegebenenfalls in Gegenwart von Inert- oder Reaktivgasen, auf eine Temperatur im Bereich von 20 bis 1.500 °C zum Trocknen und gegebenenfalls Sintern oder Calcinieren der Katalysatoren und/oder Katalysatorläufer.

Die Erfindung betrifft auch anorganische Heterogenkatalysator-Arrays, die nach einem der vorstehenden Verfahren erhältlich sind. Die Arrays können auch durch eine beliebige Kombination der vorstehenden Verfahren hergestellt werden.

Die Verfahren eignen sich zur Herstellung einer Vielzahl von Katalysatorsystemen, wie sie beispielsweise in G. Ertl, H. Knözinger, J. Weitkamp, Herausgeber, "Handbook of Heterogeneous Catalysis", Wiley - VCH, Weinheim, 1997 beschrieben sind.

Zudem betrifft die Erfindung ein Verfahren i) zur Bestimmung katalytischen Eigen-schaften, insbesondere der Aktivität, Selektivität und/oder Langzeitstabilität der vorstehend und nachstehend beschriebenen Katalysatoren in einem beschriebenen Array, umfassend die folgenden Schritte:
i1) gegebenenfalls Aktivieren der Katalysatoren im Körper,
i2) Temperieren des Körpers auf eine gewünschte Umsetzungstempera-tur,
i3) Leiten eines fluiden Reaktanten oder eines fluiden Reaktionsgemi-sches durch (einen, mehrere oder alle der) Kanäle des Körpers,
i4) (vorzugsweise getrennter) Austrag der umgesetzten Fluide aus einzelnen oder mehreren zusammengefaßten Kanälen des Körpers,
i5) (vorzugsweise getrennte) Analyse der ausgetragenen umgesetzten Fluide,
i6) gegebenenfalls vergleichende Auswertung der Analysenergebnisse mehrerer Analysen.

Eine bevorzugte Verfahrensvariante ist dadurch gekennzeichnet, daß nach dem Temperieren des Körpers auf eine erste Umsetzungstemperatur in Schritt i2) die Schritte i3) bis i6) nacheinander für mehrere unterschiedliche fluide Reaktanten oder fluide Reaktionsgemische durchgeführt werden, wobei jeweils ein Spülschritt mit einem Spülgas eingefügt werden kann, und anschließend der Körper auf eine zweite Umsetzungstemperatur temperiert werden kann und die vorstehenden Umset-zungen bei dieser Temperatur wiederholt werden können.

Es kann zu Beginn der Analyse der gesammelte Gasstrom des ganzen Arrays analysiert werden, um eine Umsetzung überhaupt nachzuweisen.

Danach können beim Vorliegen einer Umsetzung die Austräge der einzelnen Rohre oder mehrerer Rohre analysiert werden, um mit einer minimalen Anzahl an Analysevorgängen einen optimalen Katalysator zu ermitteln.

Es können einzelne Rohre oder mehrere oder alle Rohre zusammengefaßt durchströmt werden.

Vorzugsweise handelt es sich bei dem fluiden Reaktanten oder fluiden Reaktionsgemisch um ein Gas oder Gasgemisch.

Die Erfindung erlaubt die automatisierte Herstellung und katalytische Testung zum Zwecke des Massenscreenings von Heterogen-Katalysatoren für chemische Reaktionen, insbesondere für Reaktionen in der Gasphase, ganz besonders für partielle Oxidationen von Kohlenwasserstoffen in der Gasphase mit molekularem Sauerstoff (Gasphasenoxidationen).

Zur Untersuchung geeignete Reaktionen bzw. Umsetzungen sind in G Ertl, H. Knözinger, J. Weitkamp, Herausgeber, "Handbook of Heterogeneous Catalysis", Wiley - VCH, Weinheim, 1997 beschrieben. Beispiele geeigneter Reaktionen sind vornehmlich in dieser Literatur in den Bänden 4 und 5 unter den Ziffern 1, 2, 3 und 4 aufgeführt.

Beispiele geeigneter Reaktionen sind die Zersetzung von Stickoxiden, die Ammoniaksynthese, die Ammoniak-Oxidation, Oxidation von Schwefelwasserstoff zu Schwefel, Oxidation von Schwefeldioxid, Direktsynthese von Methyl-chlorsilanen, Ölraffination, Oxidative Kopplung von Methan, Methanolsynthese, Hydrierung von Kohlenmonoxid und Kohlendioxid, Umwandlung von Methanol in Kohlenwasserstoffe, katalytische Reformierung, katalytisches Cracken und Hydrocracken, Kohlevergasung und -verflüssigung, Brennstoffzellen, heterogene Photokatalyse, Synthese von MTBE und TAME, Isomerisierungen, Alkylierungen, Aromatisierungen, Dehydrierungen, Hydrierungen, Hydroformylierungen, selektive bzw. partielle Oxidationen, Aminierungen, Halogenierungen, nukleophile aromatische Substitutionen, Additions- und Eliminierungsreaktionen, Oligomerisierungen und Metathese, Polymerisationen, enantioselektive Katalyse und biokatalytische Reaktionen.

Die Erfindung wird nachstehend anhand von bevorzugten Ausführungsformen näher erläutert.

### Herstellung der anorganischen Heterogenkatalysator-Arrays

Zuerst erfolgt die Herstellung von zwei oder mehreren, bevorzugt 10 oder mehr, ganz besonders beforzut 100 oder mehr, insbesondere von 1000 und mehr, speziell 10000 oder mehr flüssigen Ausgangsmischungen (im folgenden als Mischungen bezeichnet), die ausgewählte chemische Elemente des Periodensystems enthalten, in Form von Lösungen, Emulsionen und/oder bevorzugt Suspensionen (Disper-sionen), wobei sich die hergestellten Mischungen im allgemeinen in ihrer chemischen Zusammensetzung oder Konzentration unterscheiden. Zur Über-prüfung der Reproduzierbarkeit können auch mehrere Mischungen gleicher Zusammensetzung eingesetzt werden.

Die flüssigen Mischungen enthalten im allgemeinen eine flüssige chemische Kom-ponente, die als Lösungsmittel, Emulgierhilfsmittel oder Dispergierhilfsmittel für die weiteren Komponenten der Mischung eingesetzt wird. Als Lösungsmittel oder Dispergierhilfsmittel werden organische Lösungsmittel, Emulgierhilfsmittel und/oder Wasser, bevorzugt Wasser, eingesetzt.

Außer den chemischen Elementen des Lösungsmittels oder Dispergierhilfmittels enthalten die flüssigen Mischungen ein oder mehrere, bevorzugt 2 oder mehrere, besonders bevorzugt 3 oder mehrere chemische Elemente, wobei i.a. aber nicht mehr als 50 verschiedene chemische Elemente mit einer Menge von jeweils mehr als 1 Gew.-% enthalten sind. Bevorzugt liegen die chemischen Elemente in den Mischungen in sehr inniger Vermischung vor, z.B. in Form eines Gemisches aus verschiedenen mischbaren Lösungen, innigen Emulsionen mit kleiner Tröpfchengröße und/oder bevorzugt als Suspension (Dispersion), die die betreffenden chemischen Elemente im allgemeinen in Form einer feinteiligen Fällung, z.B. in Form einer chemischen Mischfällung enthält. Besonders bewährt hat sich auch die Verwendung von Solen und Gelen, insbesondere von solchen, die die betretenden chemischen Elemente in einer weitgehend homogenen Verteilung enthalten und bevorzugt von solchen, die ein für die anschließende Beschichtung günstiges Haft- und Fließverhalten zeigen. Als Ausgangsverbindungen für die ausgewählten chemischen Elemente kommen im Prinzip die Elemente selbst, vorzugsweise in fein verteilter Form, darüber hinaus alle Verbindungen in Frage, die die ausgewählten chemischen Elemente in geeigneter Weise enthalten, wie Oxide, Ilydroxide, Oxidhydroxide, anorganische Salze, bevorzugt Nitrate, Carbonate, Acetate und Oxalate, metallorganische Verbindungen, Alkoxide, etc. Die jeweiligen Ausgangsverbindungen können in fester Form, in Form von Lösungen, Emulsionen und/oder in Form von Suspensionen eingesetzt werden.

Bevorzugte Elementverbindungen, insbesondere katalytisch aktiver Metalle, sind wasserlösliche Oxide, Hydroxide oder Salze mit organischen oder anorganischen Säuren. Aktivmetalle finden sich vorzugsweise in den Nebengruppen des Periodensystems der Elemente, beispielsweise in der 5. und 6. Nebengruppe für Oxidationskatalysatoren und in der Platingruppe für Hydrierungskatalysatoren. Das crfindungsgemäße Verfahren erlaubt auch das Screening von bislang nicht als katalytisch aktiv erachteten (untypischen) Elementen, insbesondere Metallen oder Metalloxiden.

Daneben kann die flüssige Mischung weitere Verbindungen enthalten, die die Hafteigenschaften und das Fließverhalten der flüssigen Mischung auf der zu beschichtenden Kanalinnenseite beziehungsweise Rohrinnenseite oder Katalysa-torträger und damit die Beschichtungseigenschaften der flüssigen Mischung, beeinflußen. Hierbei sind als organische Verbindungen z.B. Ethylenglykol oder Glycerin, wie sie in DE-A 4 442 346 beschrieben sind, oder z.B. Maleinsäure-Copolymere und als anorganische Verbindungen z.B. SiO₂, Siorganische Verbindungen oder Siloxane zu nennen.

Weiterhin können die Mischungen bekannte anorganische Trägermaterialien wie Al₂O₃, ZrO₂, SiO₂, Y₂O₃, TiO₂, Aktivkohle, MgO, SiC oder Si₃N₄ enthalten, die i.a. die der Katalyse zugängliche Oberfläche der in der Mischung enthaltenen katalytisch wirksamen chemischen Elemente erhöhen, die darüber hinaus die katalytischen Eigenschaften der erhaltenen Aktivmassen beeinflußen können und die ebenfalls die Haft- und Fließeigenschaften der erhaltenen Mischung beeinflußen können. In der Regel werden dabei Beschichtungen erhalten, die das bevorzugt oxidische, nitridische oder carbidische Trägermaterial neben dem eigentlichen katalytischen Material enthalten. Bei der Mischung der Komponenten oder beim anschließenden Aufheizen der Beschichtung kann das genannte Trägermaterial aber auch mit den darüber eingesetzten chemischen Elementen zu einem neuen Festkörpermaterial reagieren.

Weiterhin können die eingesetzten Mischungen zusätzlich einen anorganischen und/oder organischen Binder oder ein Bindersystem enthalten, der die eingesetzte Mischung stabilisiert. Hierfür eignen sich z.B. Binder oder Bindersysteme, die Metallsalze, Metalloxide, Metalloxidhydroxide, Metalloxidhydroxid-Phosphate und/oder bei der Einsatztemperatur des Katalysators schmelzende eutektische Verbindungen enthalten.

Die Mischung kann ferner durch Zugabe von Säuren und/oder Basen in einem definierten pH-Bereich eingestellt werden. In vielen Fällen werden pH-neutrale Suspensionen eingesetzt. Die Mischung kann dazu vorteilhafterweise auf einen pH-Wert zwischen 5 und 9, vorzugsweise zwischen 6 und 8, eingestellt werden. Besondere Ergebnisse sind mit dem erfindungsgemäßen Verfahren zu erzielen, wenn die Mischung einen hohen Feststoffanteil von bis zu 95 Gew.-%, vorzugsweise 50 bis 80 Gew.-% bei niedriger Viskosität aufweist. Bei ungenügender Fällung können Fällungshilfsmittel, wie Ammoniak zugesetzt werden.

In einer bevorzugten Ausführungsform der Erfindung wird die Mischung nach und im allgemeinen auch während der Herstellung gerührt und deren Fließfähigkeit fortlaufend, mindestens aber am Ende der Herstellung gemessen. Dies kann z.B. durch Messung der Stromaufnahme des Rühraggregates erfolgen. Mit Hilfe dieser Messung kann die Viskosität der Suspension z.B. durch Zugabe von weiteren Lösungs- oder Verdickungsmitteln so eingestellt werden, daß eine optimale Haftung, Schichtdicke und Schichtdiekengleichmäßigkeit auf der zu beschichtenden Rohrinnenwand oder dem zu beschichtenden Hilfsträger (Katalysatorträger) resultiert.

Grundsätzlich ist die Erfindung nicht auf bestimmte Katalysatormaterialien und Katalysatorzusammensetzungen beschränkt. Die Herstellung der Mischung kann parallel oder nacheinander erfolgen und erfolgt in der Regel in automatisierter Form, z.B. mit Hilfe eines Pipettierautomaten oder Pipettierrobotors oder auch eines Ink-Jet-Verfahrens, wie es beispielsweise in US 5,449,754 beschrieben ist.

Zur Beschichtung der Rohre des Rohrbündelreaktors oder Wärmetauschers nach Verfahrensvariante a) können Lösungen, Emulsionen oder Suspensionen einzelner Elemente oder Elementverbindungen voneinander getrennt gleichzeitig oder aufeinanderfolgend in die Rohre eingebracht werden. Das gleichzeitige Einbringen kann beispielsweise mit Hilfe eines modifizierten Ink-Jet Tintenstrahldrucker-Druckkopfes) erfolgen, der getrennte Zuleitungen für die einzelnen Lösungen, Emulsionen oder Suspensionen enthält und das gleichzeitige Versprühen erlaubt. Gegenüber dieser Verfahrensvariante a ist die Verfahrensvariante b bevorzugt, die insbesondere wie folgt durchgeführt wird:

Zur Herstellung der Katalysatoren oder deren Vorläufern werden zunächst Lösungen, Emulsionen und/oder Suspensionen der benötigten Elemente in separaten Gefäßen hergestellt. Hierbei handelt es sich oft um Metallsalzlösungen, beispiels-weise Nitrate. Von den separaten Lösungen werden die für die Herstellung eines Katalysators oder Katalysatorvorläufers erforderlichen Mengen im gewünschten Mengenverhältnis in einen kleinen separaten Reaktionsbehälter überführt, in dem eine intensive Vermischung der Komponenten erfolgt. Die Dosierung kann beispielsweise mit Hilfe von Pipettierautomaten oder Ink-Jet erfolgen. Beim Vermischen der Komponenten kann es zu einer Reaktion oder Fällung der Komponenten kommen. Mit Hilfe von Fällungmitteln wie Ammoniak wird gegebenenfalls eine Fällung herbeigeführt oder vervollständigt, so daß oft eine Suspension des gemischten Katalysatorvorläufermaterial vorliegt.

Da die Suspension eine geeignete Viskosität aufweisen sollte, um in ein Rohr des Rohrbündelreaktors eingebracht und verteilt werden zu können, so daß sich eine möglichst gleichmäßige und weitgehend haftfeste Verteilung des Katalysators oder Katalysatorvorläufers auf der Rohrinnenwand ergibt, kann, falls notwendig, die ge-eignete Viskosität der Suspenion wie vorstehend beschrieben mit weiteren Zusatzstoffen auf den gewünschten Wert gezielt eingestellt werden. Das Entnehmen der Suspension aus dem Reaktionsbehälter kann dabei beispielsweise mit Pipetten, die Verteilung im Rohr, wie nachstehend beschrieben, durch Verspritzen oder Versprühen erfolgen. Der Reaktionsbehälter kann dabei ganz oder teilweise geleert werden. Es können mehrere Reaktionsbehälter parallel betrieben werden, oder ein Reaktionsbehälter kann nach teilweisem Entleeren mit anderen Komponenten aufgefüllt werden, um zu einer veränderten Zusammensetzung zu gelangen.

Die Beschichtung mit den hergestellten Mischungen erfolgt, bevorzugt mittels eines Spritzverfahrens, auf verschiedene Teile eines insbesondere metallischen Rohrreaktors oder Wärmetauschers, insbesondere auf die Rohrinnenwände von (bevorzugt metallischen) Reaktionsrohren eines Rohrbündelreaktors mit einer 10 bis 2000 µm dicken Schicht, wobei im allgemeinen jedes Rohr mit einer Mischung unterschiedlicher Zusammensetzung beschichtet wird (zur Überprüfung der Reproduzierbarkeit können auch mehrere Mischungen gleicher Zusammensetzung in mehreren Rohren eingesetzt werden).

Zur Überprüfung von Schichtdickeneffekten (wie Transporteffekten) können auch die gleichen Katalysatorzusammensetzungen mit unterschiedlichen Schichtdicken in unterschiedlichen Rohren aufgebracht werden.

In einer weiteren Variante der Erfindung werden Hilfsträger (bevorzugt metallische oder keramische Rohre) verwendet, die nach oder bevorzugt vor dem Einsetzen in die Reaktionsrohre eines Rohrbündelreaktors mit der flüssigen Mischung beschichtet worden sind.

Als Hilfsträger können dabei Röhren mit beliebigem Querschnitt eingesetzt werden. Vorzugsweise sind diese kreisförmig. Das Material der Hilfsträger kann frei gewählt werden, beispielsweise kann es sich um Hilfsträger aus Glas, Metall, Aktivkohlen, Graphit, Keramik wie Glaskeramik oder Sinterquarz handeln. Das Material kann dabei dicht gesintert oder porös sein. Poröse Metalle sind dabei z. B. Sintermetalle, Metallgewebe, -gestricke, -filze oder -netze. Gerade Metalle bieten in reaktionstechnischer Hinsicht bezüglich ihrer Eigenschaften zum Beispiel ihrer Wärmeleitfähigkeit große Vorteile, speziell wenn zu erwarten ist, daß große Wärmemengen abgeführt werden müssen oder eine exakte Temperaturkontrolle notwendig ist. Zudem können die metallischen Träger bereits an sich die Aktivmasse darstellen. Die Röhren können dabei auch segmentiert sein in der Weise, daß sich parallel zur Rohrlängsachse mehrere Kanäle, vorzugsweise parallel zueinander, erstrecken. Der Querschnitt derartiger Röhren kann beispielsweise Speichenrad-ähnlich sein. Es können auch eine äußere Röhre und eine innere Röhre durch eine Mehrzahl durchgängiger Speichen verbunden sein. Die Anzahl der Speichen kann dabei frei gewählt werden.

Als poröse Materialien können die Hilfsträger auch massiv sein, sofern sie vorzugsweise eine hohe Porosität aufweisen. Sie können beispielsweise aus Schäumen der vorstehend genannten Materialien autgebaut sein. Die Massivkörper können eine beliebige geeignete Form aufweisen. Geeignete Formen sind beispielsweise Zylinder, Kegel, Scheiben, Blätter u.s.w.

Geeignete Hilfsträger werden beispielsweise von der Firma ROBU Glasfilter-Geräte GmbH, D-57644 Hattert, angeboten als Sinterfilter, von der Firma PoroCer Keramikmembranen GmbH, D-07629 Hermsdorf, angeboten als Rohrmembranen zur Crossflow-Filtration, von der Firma Tami Deutschland GmbII, D-07629 Hermsdorf/Thür., angeboten als Keramische Rohrmembranen für die Crossflow-Filtration und der Firma Hi-Tech Ceramics, a Vesuvius Group Company, Alfred, NY 14802, USA, angeboten als RETICEL ceramics. Natürlich können auch Produkte anderer Anbieter eingesetzt werden.

Die Herstellung der erfindungsgemäßen Arrays mit Hilfe derartiger Hilfsträger erfolgt vorzugsweise nach dem Verfahren f), wie es vorstehend beschrieben ist. Dabei werden die Hilfsträger vorzugsweise außerhalb des Körpers beschichtet und gegebenenfalls aufgeheizt. Nach dem Einbringen der so hergestellten Trägerkatalysatoren in vorbestimmte Kanäle des Körpers wird der gefüllte Körper gegebenenfalls aufgeheizt, um die Katalysatoren zu trocknen und gegebenenfalls zu Sintern oder zu calcinieren. Die vorstehend beschriebenen Trägerkatalysatoren können dabei die Hilfsträger als Katalysatorträger aufweisen.

Nachstehend wird die Beschichtung der Körper beziehungsweise des bevorzugten Wärmetauschers näher erläutert.

Bei den mit der zuvor hergestellten flüssigen Mischung beschichteten Teilen des, bevorzugt metallischen, Wärmetauschers handelt es sich vorzugsweise um die Rohrinnenwände von. bevorzugt, metallischen Rohrbündelreaktoren. Die Reaktionsrohre des Rohrbündelreaktors können einen beliebigen Querschnitt aufweisen, weisen aber in der Regel einen runden und insbesondere kreisförmigen Querschnitt auf. Der Innendurchmesser beträgt vorzugsweise 0,2 bis 70 mm, vorzugsweise 1 bis 25 mm, besonders bevorzugt 3 bis 10 mm. Der Rohrbündelreaktor kann bis zu 30 000 Reaktionsrohre oder mehr, bevorzugt 10 bis 20 000, besonders bevorzugt 100 bis 10 000 Reaktionsrohre enthalten, die in der Regel jeweils mit einer anders zusammengesetzten Beschichtung versehen werden.

Die Beschichtung mit flüssigen Mischungen kann durch Schwämmeln, Schlickern, Pinseln, Schleudern, Spritzen und/oder Tauchen aufgebracht werden. Weiterhin kann die Mischung in die einzelnen Rohre eingegossen und bei Drehzahlen zwischen 200 und 1000 U/min, vorzugsweise bei Drehzahlen zwischen 300 und 800 U/min, geschleudert werden. In einer bevorzugten Ausführungsform werden die Beschichtungen auf die Innenseite der Reaktionsrohre durch das Aufspritzen der oben genannten flüssigen Mischung hergestellt. Das aufgespritzte Mischungsmaterial preßt sich dabei in die Rauhigkeiten der Untergrundoberfläche ein, wobei Luftblasen unter der Beschichtung verhindert werden. Dabei kann die eingesetzte Mischung vollständig auf der besprühten Innenseite haften. Es kann aber auch, insbesondere bei geringerer Haftung und/oder niedriger Viskosität der Mischung ein Teil der Mischung durch IIerabtropfen wieder ausgetragen werden. Die zu beschichtenden Hilfsträger, z.B. in Form von Innenrohren können vollständig oder nur teilweise beschichtet werden. Dabei können insbesondere der jeweilige Reaktorrohreingang und Reaktorrohrausgang durch eine geeignete Vorrichtung von der Beschichtung ausgespart werden, um später autretende Dichtungsprobleme mit den anzu-schließenden ZuführungsundAbführungsvorrichtungen für das Fluid zu verhindern.

Gerade bei der parallelisierten Herstellung kleiner Sutbstanzmengen nach den Verfahren a) bis d) kann aber eine Behandlung der frischimprägnierten porösen Trägermasse mit einem Reaktivgas von großem Interesse sein. So könnten beispielsweise durch die Begasung eines frisch mit einer Metallnitratlösung imprägnierten porösen Trägermase mit Ammoniakgas Metallhydroxide bzw. Oxidhydrate auf dem Träger abgeschieden werden. Der Vorteil gegenüber der beschriebenen Behandlung der porösen Trägermase mit Dispersionen liegt in der so potentiell erzielbaren feineren Verteilung der Aktivkomponente auf dem Träger. Auch andere Reaktionsgase, wie etwa Schwefelwasserstoff, Kohlenmonoxid oder Blausäure sind denkbare Kandidaten für diesen Präparationsprozeß. Für die Behandlung der frischimprägnierten Trägermassen von besonderem Interesse sind zum Beispiel die Reaktivgase Ammoniak, Schwefelwasserstoff, Blausäure und Kohlendioxid. Vorzugsweise kann durch die Behandlung mit Reaktivgasen ein Arbeitsschritt, nämlich die Herstellung von Dispersionen der Aktivkomponenten, eingespart werden, da hier direkt mit den Salzlösungen der Aktivkomponenten gearbeitet wird.

Zur Erzielung besonders dicker Schichten oder besonders homogener Be-schichtungen kann die Beschichtung der Reaktionsrohre auch mehrfach hintereinander durchgeführt werden. Dabei können zwischen den einzelnen Beschichtungen eines Reaktionsrohres getrennte Trocknungs- und/oder Calcinier- und/oder Sinterschritte zwischengeschaltet werden. Die Innenwandbeschichtung wird im Falle des Spritzens vorteilhaft mit Hilfe einer oder mehrerer Sprühlanzen, vorzugsweise mit einer oder mehreren beweglichen Sprühlanzen durchgeführt. Dabei wird die Sprühlanze während des Sprühvorgangs z.B. mit Hilfe einer automatischen Vorrichtung mit einer definierten konstanten oder variierenden Geschwindigkeit durch das zu beschichtende Rohr gezogen.

Die Dicke der aufgetragenen Schicht nach Trocknung und gegebenenfalls Calcinierung oder Sinterung beträgt vorzugsweise 10 bis 2000 µm, besonders bevorzugt 20 bis 500 µm.

Zusätzlich kann vor der Beschichtung auf dem Innenrohr zuerst ein Haftvermittler und anschließend auf diesem Haftvermittler eine Katalysatormaterial enthaltende und katalytisch wirkende Deckschicht aufgetragen werden. Durch den Haftvermittler kann die Anhaftung der katalytisch wirkenden Deckschicht auf dem Innenrohr erhöht werden. Außerdem können bei Verwendung eines Haftvermittlers die Standzeiten verlängert werden. Geeignete Haftvermittler sind vorstehend beschrieben.

Darüber hinaus kann die Haftung der katalytischen Schicht durch eine chemische, physikalische oder mechanische Vorbehandlung des Innenrohres vor der Beschichtung erhöht werden. Bei einer chemischen Vorbehandlung können die Innenrohre z.B. mit Laugen oder bevorzugt mit Säuren gebeizt werden. Weiterhin kann z.B. das Innenrohr durch Strahlen mit einem trockenen Strahlmedium, insbesondere Korund oder Quarzsand aufgerauht werden, um die Haftung zu unterstützen. Darüber hinaus haben sich auch Reinigungsmittel bewährt, die eine Suspension von harten Teilchen, z.B. Korund, in einer Dispersionsflüssigkeit darstellen.

Darüber hinaus kann die Beschichtung auf dem vorzugsweise metallischen Innenrohr die Bestandteile Hilfträger und eine Katalysatormaterial enthaltende und katalytisch wirkende Deckschicht umfassen, wie dies beispielsweise in der DE-A- 19 600 685 beschrieben ist. Dabei weist der hilfsträger bevorzugt eine äußere Form auf, die der Geometrie der zu beschichtenden Oberfläche zumindest im wesentlichen entspricht. Als Hilfsträger kommen dabei beispielsweise wie vorstehend beschrieben metallische oder keramische Körper in Frage, z.B. Geflechte aus Draht oder Rohre aus Metall oder Keramik. Dabei ist mindestens der Hilfsträger und bevorzugt nur der Hilfsträger mit der katalytisch wirkenden Deckschicht beschichtet und der beschichtete Hilfsträger im gesamten Reaktionsinnenrohr oder bevorzugt in einem Teil des Reaktionsinnenrohres angeordnet. Bei dieser Rohr-im-Rohr-Anordnung kann das Außenrohr beispielsweise an einem Ende eine Verjüngung aufweisen, um ein Herausfallen des Innenrohres zu verhindern, am anderen Ende können die überstehenden Innenrohre beispielsweise durch Federn oder ein federndes Material in das Außenrohr gedrückt werden.

Die Behandlung der trockenen porösen Trägersubstanzen nach Verfahren e) mit Reaktivgasen kann ebenfalls zu katalytisch interessanten Materialien führen. So können zum Beispiel durch einfache Behandlung von Sintermetallen mit Wasserstoff oder Kohlenmonoxid oxidische Oberflächen entfernt werden und somit potentielle Aktivmassen erzeugt werden. Oder es lassen sich aus metallischen Trägern mit Gasen wie H₂S, HCI oder SO₂ dünne Überzüge von Salzen herstellen, die ebenfalls potentiell interessante Aktivkomponenten darstellen.

Für solche Präparationsmethoden interessante Gase sind zum Beispiel. CO, NH₃, N₂, H₂S, H₂, HCI, O₂, O₃, CI₂, SO₂, SO₃, Blausäure, Dämpfe organischer Lösungsmittel, etc. Das besondere an dem erfindungsgemäßen Verfahren ist, daß jeder Hilfsträger in dem verwendeten Rohrbündelreaktor im allgemeinen eine andere Zusammensetzung oder auch eine andere Schichtdicke der katalytischen Beschichtung aufweist. Darüber hinaus können die beschichteten Hilfsträger leicht gegen andere Hilfsträger mit anderen Beschichtungen ausgetauscht werden. Beispielsweise kann durch eine geeignete Reaktorkonstruktion (Vorsehen von Absperrventilen usw.) ein Wechsel einzelner Hilfsträger während des Betriebs des Reaktors möglich sein.

Die Verfahren g) und h) beschreiben Vorgehensweisen, bei denen vollständig auf die Nutzung eines Lösungsmittels zur Applikation auf den porösen Träger verzichtet wird. Interessante Verfahren g), die auch unkompliziert durchführbar sind, sind solche, bei denen die Aktivkomponente über die Gasphase auf den Träger appliziert wird. So könnten Sputter- oder CVD-Verfahren verwendet werden. Mehrkomponentengemische von Aktivsubstanzen könnten durch aufeinanderfolgende Präparationsschritte, durch geeignetes Mischen der gasförmigen Reaktanden erzeugt werden oder etwa durch Sputtern mit Mehrkomponententargets.

Ebenfalls interessant für die Applikation von Aktivmassen ist das direkte Aufbringen einer Festsubstanz, die einen Vorläufer der Aktivmasse darstellt, siehe Verfahren h). Hierbei können Verfahren unter Ausnutzung elektrostatischer Aufladung, ähnlich wie bei gängigen Lackicrverfahren, verwendet werden (Pulverbeschichtung: CD Römpp Chemie Lexikon-Version 1.0, Stuttgart/New York: Georg Thieme Verlag 1995; Powder Coating (Electrostatic Spraying) Ullmann's Encyclopedia of Industrial Chemistry, Sixth Edition, 1998, Electronig Release, 1998, Wiley-VCH, D 69451 Weinheim, Germany). Durch anschließende Behandlung (zum Beispiel thermisch, mittels Reaktionsgasen) kann der Kontakt zwischen der testen porösen Trägermasse und der festen Vorläufersubstanz erzeugt werden. Ein hoher Automatisierungsgrad läßt diese Technik besonders attraktiv erscheinen.

Beim Aufheizen des beschichteten Rohrbündelreaktors unter Vakuum oder unter einer definierten Gasatmosphäre auf Temperaturen von 20 bis 1500°C, bevorzugt 60 bis 1000°C, besonders bevorzugt 200 bis 600°C, ganz besonders bevorzugt 250 bis 500°C wird die zuvor aufgetragene Beschichtung durch Trocknen von gegebenenfalls vorliegenden Lösungsmitteln befreit. Bei erhöhter Temperatur kann darüber hinaus eine Versinterung oder Calcinierung der die Beschichtung bildenden Teilchen stattfinden. Bei diesem Prozess wird in der Regel die eigentliche katalytisch wirksame Beschichtung erhalten.

Zur Temperaturregelung sind die Reaktionsrohre bevorzugt von einem Wärmeträgermedium, beispielsweise von einer Salzschmelze oder von flüssigem Metall wie Ga oder Na umgeben. Dabei wird das flüssige Wärmeträgermedium bevorzugt an einander gegenüberliegenden Stellen des Rohrbündelreaktors zu- und abgeführt, z.B. mittels einer Pumpe, um es anschließend zwecks Wärmeab- oder Wärmeaufnahme über einen (z.B. luftgekühlten) Wärmetauscher zu führen. Das Wärmeträgermedium sorgt zum einen dafür, daß die Temperatur für die Trocknung, für die sich eventuell anschließende Sinterung der Beschichtung und für die anschließende Fluidphasentestreaktion in den Reaktionsrohren eingestellt wird. Zum anderen wird durch das Wärmeträgermedium die bei der anschließenden Testreaktion anfallende Wärmemenge abgeführt und damit entlang der Katalysatorbeschichtung die Bildung sogenannter heißer Flecken (Hot Spots), in denen lokal eine höhere Temperatur herrscht als in der übrigen Katalysator-beschichtung, unterdrückt.

Diese Art der Reaktionsführung sorgt dafür, daß die bei der Reaktion auftretende Wärme hervorragend abgeführt wird, so daß praktisch kein Hot-Spot mehr auftritt.

In einer weiteren Ausführungsform der Erfindung ist der zwischen den Reaktionsrohren befindliche Raum mit einem festem Material, vorzugsweise einem Metall oder mit einer festen Metallegierung ausgefüllt. In diesem Fall geht der Rohrbündelraktor in einen wie vorstehend beschriebenen Materialblock, insbesondere Metallblock mit Kanälen bzw. Bohrungen über. Dabei entspricht der Innendurchmesser der Bohrungen dem Innendurchmesser der Reaktionsrohre des Rohrbündelreaktors.

Es ist auch möglich, unterschiedliche Heterogenkatalysatoren in Form von Vollkontakten oder Trägerkatalysatoren nach vorstehenden, beispielsweise kom-binatorischen Verfahren, mit vorbestimmter Zusammensetzung herzustellen und jeweils eines oder mehrere vorbestimmte Rohre des Rohrbündelreaktors oder Wärmetauschers mit jedem dieser vorgefertigten Heterogenkatalysatoren zu beschicken. Dabei können die bekannten Arten von Formkörpern verwendet werden. Für jedes Einzelrohr ist es möglich, die Schütthöhe oder den Inertgehalt einer Schüttung zu variieren oder andere Schüttungsparameter einzustellen.

Die Testung der Katalysatoren erfolgt durch Umsetzung von fluiden Reaktanten oder Reaktionsgemischen, die in der Regel flüssig oder bevorzugt gasförmig vorliegen. Vorzugsweise erfolgt die Testung von Oxidationskatalysatoren durch parallele oder hintereinander erfolgende Beaufschlagung einzelner, mehrerer oder aller Rohre des beschichteten Rohrbündelreaktors mit einer Gasmischung aus einem oder mehreren gesättigten, ungesättigten oder mehrfach ungesättigten organischen Edukten (z.B. Kohlenwasserstoffen, Alkoholen, Aldehyden etc.), Sauerstoff-haltigem Gas (z.B. Luft, O₂ N₂O, NO, NO₂, O₃) und/oder z.B. H₂, und gegebe-nenfalls einem Inertgas, z.B. Stickstoff oder einem Edelgas, bei Temperaturen von 20 bis 1200°C, bevorzugt bei 50 bis 800°C, besonders bevorzugt bei 80 bis 600°C, wobei mittels einer geeigneten Vorrichtung die parallel oder hintereinander erfolgen-de getrennte Abführung der jeweiligen Gasströme der einzelnen, mehrerer oder aller Reaktionsrohre des Rohrbündelreaktors sichergestellt wird.

Durch die in der Regel unterschiedlich beschichteten Reaktionsrohre des Rohrbündelreaktors wird beispielsweise ein Gasgemisch aus z.B. einem Sauerstoff enthaltenden Gas (z.B. Luft, O₂, N₂O, NO, NO₂, O₃) und/oder H₂ und dem umzusetzenden organischen Edukt (bespielsweise Propen oder o-Xylol) geleitet. Neben den genannten gasförmigen Stoffen können auch noch weitere gasförmige Stoffe, wie Cl- oder P-haltige Stoffe zugegen sein. Dabei kann die Gasmischung nacheinander durch die einzelnen Reaktorrohre geleitet werden. In der bevorzugten Ausführungsform erfolgt die Durchleitung der Gasmischung durch die Reaktionsrohre in der Weise, daß alle Rohre gleichzeitig von der Gasmischung durchströmt werden. Dabei kann während des Hochfahrens der Reaktion, d.h. während der Aktivierungszeit der katalytischen Beschichtungen die Zusammensetzung des Feeds, die Temperatur des Wärmetauschermediums beziehungsweise des Reaktionsrohres, die Verweilzeit des Feeds und/oder der Druck des Gesamtgases im Rohrbündelreaktor verändert werden. Die das jeweilige Reaktionsrohr verlassenden Produktgase, die durch Umsetzung der eingesetzten Reaktionsgase entstehen, werden im allgemeinen separat, aber gegebenenfalls auch zusammengefaßt abgeleitet und, z.B. hinsichtlich ihrer Zusammensetzung, mittels diverser Sonden beziehungsweise Analyseverfahren analysiert.

Die Beaufschlagung des beschichteten Rohrbündelreaktors mit der genannten Gasmi-schung kann auch direkt nach der Suspensionsbeschichtung erfolgen (unter Auslassen des Trocknens und Sinterns oder Calcinierens), wobei in diesem Fall der Trocknungs- und eventuell anschließende Sinterprozess unter dem genannten Gasgemisch stattfindet. Dabei kann sich die Zusammensetzung der Innenrohrbeschichtung ändern. Insbesondere können oxidische Beschichtungen unter stark reduzierenden Bedingungen ihren Sauerstoff teilweise oder völlig abgeben oder unter stark oxidierenden Bedingungen Sauerstoff in ihre Struktur aufnehmen.

Die Zuleitung einer konstanten Gasmischung zu den einzelnen, unterschiedlich beschichteten Reaktionsrohren des Rohrbündelreaktors kann z.B. über eine auf den Rohrbündelreaktor im wesentlichen gasdicht aufsetzbare Gasversorgungshaube erfolgen.

Die Vermischung der eingesetzten Gase kann vor der Zuleitung in die Gasver-sorgungshaube oder erst in dieser, z.B. mit Hilfe eines statischen Mischers, erfolgen.

Die Ableitung der einzelnen Reaktionsgase kann über eine auf den Rohrbün-delreaktor im wesentlichen gasdicht aufgesetzte Vorrichtung erfolgen, wobei die einzelnen Reaktionsgase der einzelnen mehrerer oder aller Reaktionsrohre separat abgeleitet und über eine Ventilschaltung anschließend separat analysiert werden.

Eine andere Art, die einzelnen Abgase der jeweiligen im allgemeinen unter-schiedlich beschichteten Reaktionsrohre separat abzuleiten, besteht in einer z.B. computergesteuert mechanisch bewegten "Schnüffelvorrichtung" mit einer Schnüffelleitung für das zu entnehmende Gas, die im wesentlichen automatisch auf, in oder über dem Ausgang des jeweiligen Reaktionsrohres positioniert wird und anschließend eine Reaktionsgasprobe entnimmt. Die Positionierung und Entnahme des jeweiligen Reaktionsgases wird dabei bevorzugt in der Weise durchgeführt, daß nur das eigentliche, später zu analysierende Reaktionsgas und kein zusätzliches Fremdgas von außen in die Schnüffelleitung gelangt. Falls die Positionierung der Schnüffelvorrichtung auf dem Reaktionsrohrende erfolgt, so ist eine im wesentliche gasdichte Anbringung der Schnüffelleitung auf dem Reaktionsrohrende, z.B. durch Andrücken der Schnüffelvorrichtung auf die Stirnseite des Rohrreaktors, von Vorteil. Falls die Positionierung der Schnüffelvorrichtung in oder über dem Ausgang des jeweiligen Reaktionsrohres erfolgt, so ist es vorteilhaft, die Reaktionsgase über einen in der Schnüffelleitung eingestellten Unterdruck in der Weise in die Schnüffelvorrichtungen zu saugen, daß die Menge der angesaugten Reaktionsgase so begrenzt ist, daß keine zusätzlichen Fremdgase in die Schnüffel-leitung hineingesaugt werden. Als besonders vorteilhaft hat es sich im Fall der Positionierung der Schnüffelleitung in den Ausgang des jeweiligen Reaktionsrohres erwiesen, wenn das Ende der Schnüffelleitung in der Weise verjüngt ist, daß durch das Einstecken der Schnüffelleitung in das Ende des jeweiligen Reaktionsrohres eine im wesentlichen gasdichte Abdichtung der aus dem betreffenden Reaktionsrohr austretenden Reaktionsgase gegen den Außenraum gewährleistet ist. Nach erfolgter Entnahme von Reaktionsgas aus dem betrachteten Reaktionsrohr des Rohrbündelreaktors wird die Schnüffelvorrichtung - vorzugsweise automatisch - auf, in oder über einem anderen, in der Regel dem nächstgelegenen Ausgang eines weiteren Reaktionsrohres positioniert, um dort die nächste Gasentnahme zu bewerkstelligen. Auf diese Art und Weise können alle Abgase der Reaktionsrohre für eine Probenahme separat angefahren und anschließend analysiert werden. Es ist nicht nur möglich, daß die Positionierung auf, in oder über dem Reaktionsrohrausgang bewegt wird und der Rohrbündelrcaktor feststeht, sondern die Schnüffelleitung kann während der Positionierung feststehen und der Rohrbündelreaktor entsprechend bewegt werden. Während der Positionierung können auch sowohl die Schnüffelvorrichtung als auch der Rohrbündelreaktor eine Bewegung erfahren. In einer bevorzugten Verfahrensvariante bleibt der Rohrbün-delreaktor unverändert und nur die Schnüffelvorrichtung wird während der Positionierung über oder auf. die jeweiligen Reaktionsrohrenden bewegt. In einer anderen bevorzugten Verfahrensvariante erfährt der Rohrbündelreaktor während der Positionierung eine Drehbewegung um seine Achse, während die Schnüffelleitung bei einer Positionierung über den jeweiligen Reaktionsrohrenden eine lineare Bewegung in Richtung zur Drehachse des Rohrbündelreaktors durchführt, während bei einer Positionierung auf den jeweiligen Reaktionsrohrenden die Schnüffelvor-richtung eine zusätzliche Bewegung parallel zur Reaktorachse durchführt. Es können auch mehrere Schnüffelvorrichtungen gleichzeitig für die Probenahme der verschiedenen Reaktionsgase eingesetzt werden. Zudem kann auch eine Probenahme mehrerer zusammengefaßter Rohre erfolgen.

In analoger Weise, wie die Gasabführung über sogenannte Schnüffelleitungen erfolgt, kann auch als Alternative zur Gasversorgungshaube die Gaszuleitung über ein solches Prinzip erfolgen, wobei eine sequentielle Testung der einzelnen Rohre erfolgt. Dabei muß natürlich die Abgasschnüfselleitung synchron zur Frischgaszuführungsleitung positioniert werden.

Das Screening der katalytischen Performance der einzelnen katalytischen Beschichtungen der einzelnen Reaktionsrohre kann durch chemische Analyse der jeweiligen Gasströme mittels geeigneter, an sich bekannter Methoden erfolgen. Die aus den einzelnen Reaktionsrohren des Rohrbündelreaktors einzeln abgeleiteten Gassströme werden dabei z.B. mittels geeigneter Vorrichtungen z.B. über Gaschromatographie mit FID und/oder WLD als Detektor, oder z.B. mittels Massenspektrometrie einzeln auf ihre Zusammensetzung analysiert. Dabei wird die erhaltene Gaszusammensetzung insbesondere hinsichtlich ihres relativen Gehaltes an gewünschtem Produkt beziehungsweise an verschiedenen gewünschten Produkten analysiert und die erhaltenen Konzentrationen in Relation zum umgesetzten Edukt gesetzt, wobei sich Werte für die jeweiligen Umsätze (Aktivität) und Produktselektivitäten ergeben. Dabei ist es in vielen Fällen nützlich, die Produktselektivitäten der einzelnen Katalysatoren über einen längeren Zeitraum von im allgemeinen Stunden bis mehreren Wochen zu messen. Bei der Selektion der für die jeweilige Reaktion geeignetsten Katalysatorbeschichtung kann es, um die Zahl der Gasanalysen zu beschränken, nützlich sein, die Wiederholungsmessungen nur noch an Gaszusammensetzungen von ausgewählten Reaktorrohren zu bestimmen, die eine gewünschte Grenzkonzentration oder Grenzselektivität an bestimmten Produkten überschreiten.

Nach dem katalytischen Test können die aufgebrachten katalytischen Innenbe-schichtungen entfernt werden, so daß der erhaltene Rohrbündelreaktor wieder einer erneuten katalytischen Beschichtung zugänglich ist.

Die Katalysatorbeschichtungen können dadurch erneuert werden, daß die alte katalytisch wirkende Deckschicht der Beschichtung zumindest im wesentlichen abgetragen wird und eine neue katalytisch wirkende Beschichtung durch Schwämmeln, Pinseln, Schleudern, Spritzen und/oder Tauchen aufgebracht wird. Zweckmäßigerweise wird man dasselbe Beschichtungsverfahren wählen, mit dem die zuvor entfernte katalytische Beschichtung aufgebracht worden ist. Das Abtragen der alten katalytisch wirkenden Deckschicht der Beschichtung kann insbesondere durch Strahlen mit einem Strahlmedium, z.B. Korund, Siliciumcarbid, feinem Sand oder dergleichen, auf einfache Weise geschehen. Alternativ hat sich auch eine Behandlung mit Wasserdampf oder die Verwendung von chemischen Abtragemethoden bewährt.

Eine effiziente Methode zur Entfernung der Innenbeschichtungen - beispielsweise nach der Katalysatortestung - stellt der Einsatz von Bürsteneinrichtungen, z.B. analog einer Flaschenbürste, in der Regel in Verbindung mit den beschriebenen Reinigungsmitteln dar. Bevorzugt ist die Entfernung der Innenbeschichtungen auf zumindest weitgehend automatisiertem Wege.

Das erfindungsgemäße Verfahren kann leicht in automatisierter Form von Robotern durchgeführt werden. Eine Beschichtung von Rohren mit dem Katalysator gewährleistet eine optimale Strömung des Fluids, verursacht nur geringen Druckverlust und verhindert Verstopfungen in den einzelnen Reaktionsrohren des Rohrbündelreaktors.

Die räumliche Trennung und eindeutige Zuordnung der getesteten Beschichtungen bietet den Vorteil, mit einem Apparat (Rohrbündel) gleichzeitig eine im allgemeinen der Anzahl an Rohren entsprechende Anzahl an Materialien parallel mit reduzier-tem Kosten- und Zeitaufwand testen zu können.

Weiterhin bietet der Rohrbündelreaktor im Vergleich zu anderen Systemen, z.B. Lochplatten, CVD-Arrays, usw. den Vorteil, möglichst nahe an einem technischen Prozeß (scale-up-Fähigkeit bleibt erhalten) zu testen. Es kann sehr schnell und kostengünstig eine technisch relevante Optimierung durchgeführt werden, insbesondere auch, weil eine Vielzahl von Katalysatoren parallel/gleichzeitig unter gleichen Bedingungen getestet werden kann.

## Patentansprüche

1. Verfahren zur Herstellung von Arrays aus Heterogenkatalysatoren und/oder deren Vorläufern, aufgebaut aus einem Körper, der, bevorzugt parallele, durchgehende Kanäle aufweist und in dem mindestens n Kanäle n unterschiedliche Heterogenkatalysatoren und/oder deren Vorläufer enthalten, wobei n den Wert 2, vorzugsweise 10, besonders bevorzugt 100 hat, um-fassend die folgenden Schritte:
a1) Herstellen von Lösungen, Emulsionen und/oder Dispersionen von Elementen und/oder Elementverbindungen der im Katalysator und/oder Katalysatorvorläufer vorliegenden chemischen Elemente, und gegebenenfalls von Dispersionen anorganischer Trägermaterialien,
a2) gegebenenfalls Eintragen von Haftvermittlern, Bindemitteln, Viskositätsreglern, pH-regelnden Mitteln und/oder festen anorganischen Trägern in die Lösungen, Emulsionen und/oder Dispersionen,
a3) gleichzeitige oder aufeinanderfolgende Beschichtung der Kanäle des Körpers mit den Lösungen, Emulsionen und/oder Dispersionen, wobei in jeden Kanal eine vorbestimmte Menge der Lösungen, Emulsionen und/oder Dispersionen eingebracht wird, um eine vorbestimmte Zusammensetzung zu erhalten,
a4) Behandlung und Umsetzung der nach der Beschichtung erhaltenen frischimprägnierten feuchten Kanäle mit einem oder mehreren Reaktivgasen, und
a5) gegebenenfalls Aufheizen des beschichteten Körpers, gegebenenfalls in Gegenwart von Inert- oder Reaktivgasen, auf eine Temperatur im Bereich von 20 bis 1500°C zum Trocknen und gegebenenfalls Sintern oder Calcinieren der Katalysatoren und/oder Katalysatorvorläufer.

2. Verfahren zur Herstellung von Arrays aus Heterogenkatalysatoren und/oder deren Vorläufern, aufgebaut aus einem Körper, der, bevorzugt parallele, durchgehende Kanäle aufweist und in dem mindestens n Kanäle n unterschiedliche Heterogenkatalysatoren und/oder deren Vorläufer enthalten, wobei n den Wert 2, vorzugsweise 10, besonders bevorzugt 100 hat, umfassend die folgenden Schritte:
b1) Herstellen von Lösungen, Emulsionen und/oder Dispersionen von Elementen und/oder Elementverbindungen der im Katalysator und/oder Katalysatorvorläufer vorliegenden Elemente, und gege-benenfalls von Dispersionen anorganischer Trägermaterialien,
b2) gegebenenfalls Eintragen von Haftvermittlern, Bindemitteln, Viskositätsreglern, pH-regelnden Mitteln und/oder festen anorganischen Trägern in die Lösungen, Emulsionen und/oder Dispersionen,
b3) gleichzeitige oder aufeinanderfolgende Beschichtung von in den Kanälen des Körpers vorliegenden Katalysatorträgern mit den Lösun-gen, Emulsionen und/oder Dispersionen, wobei in jeden Kanal eine vorbestimmte Menge der Lösungen, Emulsionen und/oder Dispersionen eingebracht wird, um eine vorbestimmte Zusam-mensetzung auf den Katalysatorträgern zu erhalten,
b4) Behandlung und Umsetzung der nach der Beschichtung erhaltenen frischimprägnierten feuchten Kanäle mit einem oder mehreren Reaktivgasen, und
b5) gegebenenfalls Aufheizen des Körpers mit den beschichteten Katalysatorträgern in den Kanälen, gegebenenfalls in Gegenwart von Inert- oder Reaktivgasen, auf eine Temperatur im Bereich von 20 bis 1500°C zum Trocknen und gegebenenfalls Sintern oder Calci-nieren der Katalysatoren und/oder Katalysatorvorläufer.

3. Verfahren zur Herstellung von Arrays aus Heterogenkatalysatoren und/oder deren Vorläufern, aufgebaut aus einem Körper, der, bevorzugt parallele, durchgehende Kanäle aufweist und in dem mindestens n Kanäle n unterschiedliche Heterogenkatalysatoren und/oder deren Vorläufer enthalten, wobei n den Wert 2, vorzugsweise 10, besonders bevorzugt 100 hat, umfassend die folgenden Schritte:
c1) Herstellen von Lösungen, Emulsionen und/oder Dispersionen von Elementen und/oder Elementverbindungen der im Katalysator und/oder Katalysatorvorläufer vorliegenden chemischen Elemente und gegebenenfalls von Dispersionen anorganischer Trägermateria-lien,
c2) Vermischen vorbestimmter Mengen der Lösungen, Emulsionen und/oder Dispersionen und gegebenenfalls von Fällungshilfsmitteln in einem oder mehreren parallel betriebenen Reaktionsgetäßen,
c3) gegebenenfalls Eintragen von Haftvermittlern, Bindemitteln, Viskositätsreglern, pH-regelnden Mitteln und/oder festen anorganischen Trägern in die erhaltene(n) Mischung(en),
c4) Beschichtung eines oder mehrerer vorbestimmter Kanäle des Kör-pers mit der Mischung oder mehreren Mischungen,
c5) Wiederholung der Schritte c2) bis c4) für andere Kanäle des Körpers, bis die Kanäle mit den jeweils vorbestimmten Katalysa-tor- und/oder Katalysatorvorläuferzusammensetzungen beschichtet sind,
c6) Behandlung und Umsetzung der nach der Beschichtung erhaltenen frischimprägnierten feuchten Kanäle mit einem oder mehreren Reaktivgasen, und
c7) gegebenenfalls Aufheizen des beschichteten Körpers, gegebenen-falls in Gegenwart von Inert- oder Reaktivgasen, auf eine Temperatur im Bereich von 20 bis 1500°C zum Trocknen und gegebenenfalls Sintern oder Calcinieren der Katalysatoren und/oder Katalysatorvorläufer.

4. Verfahren zur Herstellung von Arrays aus Heterogenkatalysatoren und/oder deren Vorläufern, aufgebaut aus einem Körper, der, bevorzugt parallele, durchgehende Kanäle aufweist und in dem mindestens n Kanäle n unterschiedliche Heterogenkatalysatoren und/oder deren Vorläufer enthalten, wobei n den Wert 2, vorzugsweise 10, besonders bevorzugt 100 hat, umfassend die folgenden Schritte:
d1) Herstellen von Lösungen, Emulsionen und/oder Dispersionen von Elementen und/oder Elementverbindungen der im Katalysator und/oder Katalysatorvorläufer vorliegenden chemischen Elemente und gegebenenfalls von Dispersionen anorganischer Trägermateria-lien,
d2) Vermischen vorbestimmter Mengen der Lösungen, Emulsionen und/oder Dispersionen und gegebenenfalls von Fällungshilfsmitteln in einem oder mehreren parallel betriebenen Reaktionsgefäßen,
d3) gegebenenfalls Eintragen von Haftvermittlern, Bindemitteln, Viskositätsreglern, pH-regelnden Mitteln und/oder festen anorganischen Trägern in die erhaltene(n) Mischung(en),
d4) Beschichtung von in einem oder mehreren vorbestimmten Kanälen des Körpers vorliegenden Katalysatorträgern mit der Mischung oder einer oder mehrerer der Mischungen,
d5) Wiederholung der Schritte d2) bis d4) für andere Kanäle des Körpers, bis die in den Kanälen des Körpers vorliegenden Kataly-satorträger mit den jeweils vorbestimmten Katalysator- und/oder Katalysatorvorläuferzusammensetzungen beschichtet sind,
d6) Behandlung und Umsetzung der nach der Beschichtung erhaltenen frischimprägnierten feuchten Kanäle mit einem oder mehreren Reaktivgasen, und
d7) gegebenenfalls Aufheizen des Körpers mit den beschichteten Katalysatorträgem in den Kanälen, gegebenenfalls in Gegenwart von Inert- oder Reaktivgasen, auf eine Temperatur im Bereich von 20 bis 1500°C zum Trocknen und gegebenenfalls Sintern oder Calcinieren der Katalysatoren und/oder Katalysatorvorläufer.

5. Verfahren zur Herstellung von Arrays aus Heterogenkatalysatoren und/oder deren Vorläufern aufgebaut aus einem Körper, der, bevorzugt parallele, durchgehende Kanäle aufweist und in dem mindestens n Kanäle n unterschiedliche Heterogenkatalysatoren und/oder deren Vorläufer enthalten, wobei n den Wert 2, vorzugsweise 10, besonders bevorzugt 100 hat, umfassend die folgenden Schritte:
e1) Umsetzung von vorbestimmten trockenen porösen Katalysatorträgern mit einem oder mehreren Reaktivgasen zur Herstellung von vorbestimmten Trägerkatalysatoren außerhalb oder innerhalb des Körpers,
e2) gegebenenfalls Einbringen der außerhalb des Körpers hergestellten Trägerkatalysatoren in vorbestimmte Kanäle des Körpers, und
e3) gegebenenfalls Aufheizen des gefüllten Körpers, gegebenenfalls in Gegenwart von Inert- oder Reaktivgasen, auf eine Temperatur im Bereich von 20 bis 1500°C zum Trocknen und gegebenenfalls Sintern oder Calcinieren der Katalysatoren.

6. Verfahren zur Herstellung von Arrays aus Heterogenkatalysatoren und/oder deren Vorläufern, aufgebaut aus einem Körper, der, bevorzugt parallele, durchgehende Kanäle aufweist und in dem mindestens n Kanäle n unterschiedliche Heterogenkatalysatoren und/oder deren Vorläufer enthalten, wobei n den Wert 2, vorzugsweise 10, besonders bevorzugt 100 hat, umfassend die folgenden Schritte:
f1 ) Beschichten und gegebenenfalls Aufheizen von vorbestimmten Katalysatorträgern zur Herstellung von vorbestimmten Trägerka-talysatoren in der in Anspruch 2 oder 4 definierten Art außerhalb des Körpers,
f2) Einbringen der Trägerkatalysatoren in vorbestimmte Kanäle des Körpers,
f3) gegebenenfalls Aufheizen des gefüllten Körpers, gegebenenfalls in Gegenwart von Inert- oder Reaktivgasen, auf eine Temperatur im Bereich von 20 bis 1500°C zum Trocknen und gegebenenfalls Sintern oder Calcinieren der Katalysatoren.

7. Verfahren zur Herstellung von Arrays aus Heterogenkatalysatoren und/oder deren Vorläufern, aufgebaut aus einem Körper, der, bevorzugt parallele, durchgehende Kanäle aufweist und in dem mindestens n Kanäle n unterschiedliche Heterogenkatalysatoren und/oder deren Vorläufer enthalten, wobei n den Wert 2, vorzugsweise 10, besonders bevorzugt 100 hat, umfassend die folgenden Schritte:
g1) gleichzeitige oder aufeinanderfolgende Beschichtung der Kanäle des Körpers mit gasförmig gemachten chemischen Elementen oder deren Gemischen der im Katalysator vorliegenden chemischen Elemente, und
g2) gegebenenfalls Aufheizen des beschichteten Körpers, gegebenenfalls in Gegenwart von Inert- oder Reaktivgasen, auf eine Temperatur im Bereich von 20 bis 1500 °C zum Trocknen und gegebenenfalls Sintern oder Calcinieren der Katalysatoren und/oder Katalysatorvorläufer.

8. Verfahren zur Herstellung von Arrays aus Heterogenkatalysatoren und/oder deren Vorläufern, aufgebaut aus einem Körper, der, bevorzugt parallele, durchgehende Kanäle aufweist und in dem mindestens n Kanäle n unterschiedliche Heterogenkatalysatoren und/oder deren Vorläufer enthalten, wobei n den Wert 2, vorzugsweise 10, besonders bevorzugt 100 hat, umfassend die folgenden Schritte:
h1) gleichzeitige oder aufeinanderfolgende Beschichtung der Kanäle des Körpers mit pulverförmigen chemischen Elementen oder deren Gemischen der im Katalysator vorliegenden chemischen Elemente, und
h2) gegebenenfalls Autheizen des beschichteten Körpers, gegebenenfalls in Gegenwart von Inert- oder Reaktivgasen, auf eine Temperatur im Bereich von 20 bis 1.500 °C zum Trocknen und gegebenenfalls Sintern oder Calcinieren der Katalysatoren und/oder Katalysatorvorläufer.

9. Array, erhältlich nach einem Verfahren gemäß einem der Ansprüche 1 bis 8.

10. Verfahren zur Bestimmung der Aktivität, Selektivität und/oder Langzeit-stabilität der Katalysatoren in einem Array nach Anspruch 9, umfassend die folgenden Schritte:
i1) gegebenenfalls Aktivieren der Katalysatoren im Körper,
i2) Temperieren des Körpers auf eine gewünschte Umsetzungstempera-tur,
i3) Leiten eines fluiden Reaktanten oder eines fluiden Reaktionsgemi-sches durch Kanäle des Körpers,
i4) Austrag der umgesetzten Fluide aus einzelnen oder mehreren zusammengefaßten Kanälen des Körpers,
i5) Analyse der ausgetragenen umgesetzten Fluide,
i6) gegebenenfalls vergleichende Auswertung der Analysenergebnisse mehrerer Analysen.
